# EUROPEAN PATENT SPECIFICATION

(11) **EP 1 783 759 B1**
(45) Date of publication and mention of the grant of the patent: **11.02.2009**
(21) Application number: 06300985.6
(22) Date of filing: 27.09.2006
(51) Int. Cl.: G11B 7/09

(54) **Objective lens driving device for optical recording media and device having the objective lens driving device**
Antriebsvorrichtung einer Objektivlinse für optische Aufzeichnungsträger und Gerät mit einer solcher Antriebsvorrichtung
Dispositif d'entrainement d'une lentille d'objectif pour moyens d'enregistrement optique et appareil comportant cet dispositif

(30) Priority: 07.11.2005 EP 05110424
(43) Date of publication of application: 09.05.2007
(73) Proprietor: THOMSON Licensing S.A., 92100 Boulogne-Billancourt (FR)
(72) Inventor: Bammert, Michael, 78739, Hardt (DE); Suzuki, Tsuneo, 78087, Mönchweiler (DE); Dupper, Rolf, 78050, Villingen-Schwenningen (DE)
(74) Representative: Thies, Stephan

(56) References cited:
- EP-A- 1 124 222
- EP-A- 1 282 120
- US-A1- 2003 218 962
- US-A1- 2004 148 620
- US-A1- 2005 185 530

## Description

### Field of the invention

The present invention relates to a pickup for optical recording media, in particular to a mechanical layout thereof, and to a device for accessing optical recording media having the pickup.

### Background of the invention

In apparatus to read from or write to optical recording media having information tracks, a pickup is employed to access locations of the recording medium. For following the information tracks, the medium and the pickup are being moved relative to each other. In the pickup, typically, one or more light beams are generated, are focused onto a target spot on a layer within the medium, and when reading the medium, one or more readout beams coming from the target spot are projected onto a photodetector, where they are converted into electrical signals for further evaluation.

The medium mounted in the apparatus and being moved relative to the pickup may have position error in that the target spot varies relative to and around its nominal position. Such position error may occur within the layer in a direction at least substantially diagonal or perpendicular to the information tracks where it is generally called tracking error, the direction correspondingly being called tracking direction; it also may occur in a direction at least substantially perpendicular to the layer where it is generally called focus error, the direction correspondingly being called focus direction; or it occurs in the form that the orientation of the medium relative to the pickup deviates from a nominal orientation, which form is often called tilt error. A direction which is orthogonal both to the tracking direction as well as to the focusing direction will be called information direction in the following, because it is the direction of the tangent to the information track in the target spot.

To keep the light beam focused on the target spot and to keep the readout beam on the photodetector, optical media pickups typically have a so-called actuator or objective lens driving device. The actuator, typically, has a movable part which carries a lens and is positioned by magnets interacting with coils onto which electrical currents are imposed. A so-called tracking servo loop controls the position of the movable part in the tracking direction, a so-called focus servo loop controls the position of the movable part in the focus direction, and for some pickups a so-called tilt servo loop controls the angle of the readout beam which in turn influences the incidence of the readout beam onto the photodetector.

The tracking direction and the focus direction together span a plane of motion, in which the focussing, tracking and tilt motions take place. The movable part of the actuator is typically suspended by elastic suspension means like wires oriented in parallel and in the information direction, i.e. at right angle to the plane of motion.

Generally, the actuator carries on its movable part one or more focussing coils, one or more tracking coils, and optionally one or more tilt coils. These coils may be realized as printed coils or as conventional coils wound onto bobins. In each case, at least parts of the coils are facing magnets the surface of which typically is oriented in the plane of motion. These magnets, even if having several distinct poles, may consist of a single i.e. monolithic piece of magnetic material appropriately magnetized, or they may be compound magnet configurations comprizing but not restricted to one or more physically distinct poles and zero or more pieces of spacing meterial. All through the following description, "magnet" is always meant to denote both these forms.

In order to generate a strong tracking force with a closed loop tracking coil oriented in the plane of motion, the magnet will have a section where magnetic poles of opposing polarity adjoin along a separation line oriented in focus direction. This setup or an equivalent is needed in order that the upper branch of the tracking coil having a current in one direction, and the lower branch of the tracking coil having the return current flowing back in the opposite direction, will face magnetic fields of opposing polarity and hence will generate Lorentz forces both going in the same direction. According to the same principle, for a strong focus force, the magnet will have another section where magnetic poles of opposing polarity adjoin along a separation line oriented in tracking direction. The two separation lines of different orientation taken together, pickup magnets often have, on their surface, one or more boundaries or separation lines of opposing poles which are L-shaped, C-shaped or otherwise non-straight, buckled or curved. A magnetic pole confined by boundaries or separation lines like these will often be of unequal width.

In a coil facing a magnetic pole of non-straight circumference, the force generating coil branches, also called operative portions of the coil, may be facing parts of the magnetic pole that are of different width. As a consequence, the force generated by a branch will be unevenly distributed over the branch or between the branches, so that the resulting point of impact of the equivalent force or forces will deviate from the geometric center or centroid of the branch or branches involved. This in turn may lead to a torque being generated as an unwanted by-product when ideally a pure thrust force is aimed at.

US 2005/0185530 A1 discloses object lens driving devices where coils on a movable unit are facing magnets having two or more poles where in a part of the magnet that faces a coil two opposing magnetic poles adjoin along a first separation line, and where the first separation line has a first line part where at least one of the adjoining magnetic poles has a profile property of being wider, in a direction transversal to the first separation line, than at a second line part of the first separation line. L-shaped separation lines between other opposing poles are also disclosed. In all devices it discloses, a movable unit with a two-sided suspension is shown. In order to counteract unwanted torques, US 2005/0185530 proposes to place the focussing coils in such a way that their center is offset, in tracking direction, from the point where the smaller ones of the magnetic poles adjoining at the L-shaped boundary or separation line have maximum magnetic flux density. With such arrangement, when the movable unit is offset in tracking direction, the forces generated by the two focusing coils will not be equal, so that a counteracting torque is generated.

### Invention

The prior art can be seen to have the drawbacks that the movable unit has a mechanically complicated suspension, that only those unwanted torques are neutralized that arise when focussing offset and tracking offset exist simultaneously and that, by the disclosed design, coils are being deliberately placed where the sensitivity of the coil-magnet interaction is sub-optimal. The invention aims to propose a pickup with an actuator that is improved in this regard.

According to the invention, an objective lens driving device or actuator is proposed, where in the vicinity of that part of a separation line between opposing magnetic poles where the poles are wider, an un-magnetized neutral zone between the poles is formed wider than where the poles are narrower.

An objective lens driving device or actuator according to the invention has a movable unit or movable part carrying coils that face fixed multipolar magnets. In the magnets, opposing magnetic poles adjoin along a first separation line having a first line part where one or both of the adjoining magnetic poles are wider than at a second line part of the first separation line. The invention then teaches that near the first line part of the first separation line, the magnet has an un-magnetized neutral zone that is wider than in the vicinity of the second line part. In that way, in light of the bigger area of the wider part of the poles, the magnetic flux is deliberately reduced there slighty and to such an extent that the force generated there is of same magnitude than the force generated in the narrower part of the poles adjoining at the second separation line. One advantage of this is that focusing coils facing magnetic poles adjoining at a separation line orthogonal to the first separation line can be freely positioned, for instance advantageously where the magnetic flux is maximum. Another advantage is that the scheme can be realized together with an actuator that has a one-sided suspension.

In the objective lens driving device, the property of a magnetic pole of being wider at the first line part may be due to the pole adjoining a third magnetic pole along a second separation line at least partially not parallel to the first separation line and the pole being confined by the first and second separation lines. In particular, the second separation line may be L-shaped with a first line segment being parallel to the first separation line and a second line segment being at right angles to the first separation line.

Alternatively, the property of a magnetic pole of being wider at the first line part than at a second line part may be due to the pole having a reduced space because of one or more other obstructing apparatus elements. Depending on design criteria like pickup dimensions, manufacturability or longevity, and on the specific pickup design resulting therefrom, the space for the magnetic poles in an actuator may be reduced or restricted. Depending on the material of any obstructing apparatus elements, it may be appropriate that a magnetic pole not only keeps out of the way of these elements, but even observes a certain distance or clearance therefrom, which further reduces the space where a magnetic pole may be situated. Space restrictions because of obstructing elements need not be symmetric with respect to the pole geometry, hence a pole may result having different width along different line parts of a separation line where it adjoins an opposing pole.

Advantageously, between the first and second line parts, the transition between the different widths of the un-magnetized neutral zone is formed in a stepped, linearly increasing, or steadily changing fashion, or in a combination thereof. The advantage is that account can be taken of the properties of any magnetizing equipment used for generating the magnetic poles.

When there are, besides the first separation line, other L-shaped separation lines where the poles adjoin with other, third poles, the transition between the parts of the un-magnetized neutral zone of different width is advantageously situated near where the L-shaped separation lines have their corner or buckling. In that way, the width of the force-generating interaction area between magnet pole and coil is substantially kept constant over the length of the first separation line.

Also, the width of the wider part of the un-magnetized neutral zone is advantageously dimensioned in such a way that the intersection area of the coil with the wider part of the magnetic pole is substantially equal to the intersection area of the coil with the narrower part of the magnetic pole. In that way, the Lorentz forces generated by the setup will be evenly distributed.

A device for accessing optical recording media according to the invention is a device for reading from such media or for writing to such media, or for reading and writing such media, which employs an objective lens driving device or actuator according to the invention as described above.

Exemplary embodiments of the invention are illustrated in the drawings and are explained in more detail in the following description. They refer to the recording medium being an optical disk and to the readout beam being a reflected beam. Despite this, it is clear to those in the art that the invention can be employed on any kind of optical recording medium having information tracks in layers, like those in card or tape form; and regardless whether the readout principle is of a reflective or of a transductive type.

### Brief description of drawings

In the drawings, throughout which like parts are designated by like reference numerals,
- Fig. 1: shows in perspective view a pickup for optical disks;
- Fig. 2: shows in perspective view the assembly consisting of a printed circuit board carrying printed coils and magnets facing it, for a prior art actuator;
- Fig. 3: shows in plan view the superposition of magnet contours and coil contours for a prior art actuator;
- Fig. 4: shows in plan view the superposition of magnet contours and coil contours for an actuator according to the invention.

### Detailed description of preferred embodiments

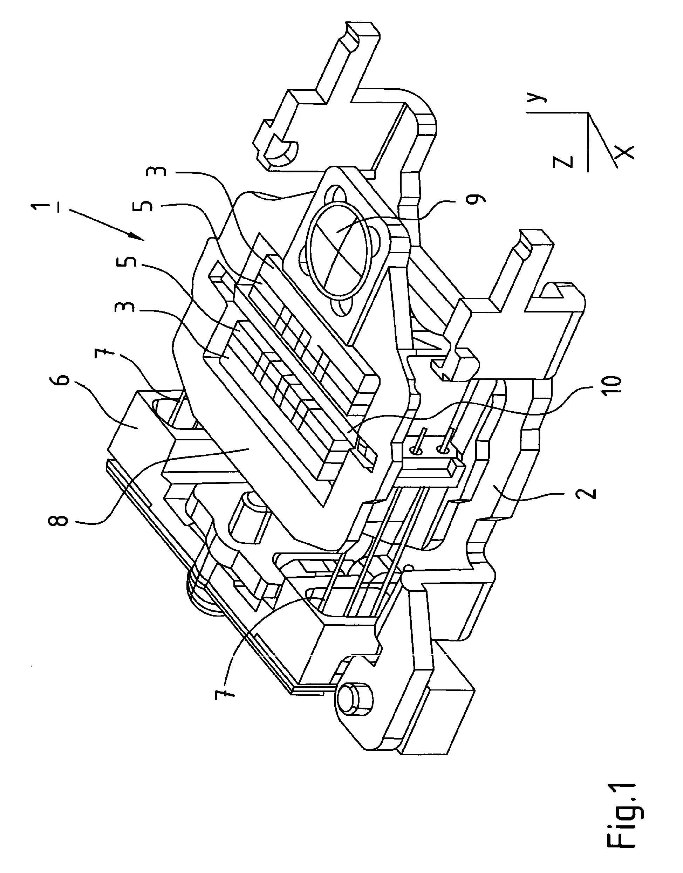

**Fig. 1** shows in perspective view a pickup 1 for optical disks, optical disks being a common type of optical recording media. In optical disk media, information tracks are shaped as spirals or concentric circles. In pickups for optical disks, motion of the medium relative to the pickup is achieved by rotating the disk, for example by a so-called spindle motor, and by moving the pickup in a radial direction relative to the centre of the disk, for example by a step motor or a threaded spindle or an equivalent linear positioning device of the art. In a pickup with an optical disk, the tracking direction corresponds to the radial direction, and the focus direction corresponds to an axial direction parallel to the rotation axis of the disk. In the following description, a reflective optical disk is assumed, where the readout beam corresponds to the reflected light beam resulting from the incident light beam being reflected by an outer or inner surface or layer of the disk.

The pickup 1 of Fig. 1 has a base plate 2 with two vertical yokes 3 carrying multipolar magnets 5, and a suspension wire holder 6, into which suspension wires 7 are fastened. On their other end, the elastic suspension wires 7 are fixed to a movable part 8 holding a lens 9 and a printed circuit board 10 having printed coils, occluded in this view. The printed circuit board 10 is oriented in the plane of motion spanned by the focus direction Y and the tracking direction X, the suspension wires are oriented in the information direction Z.

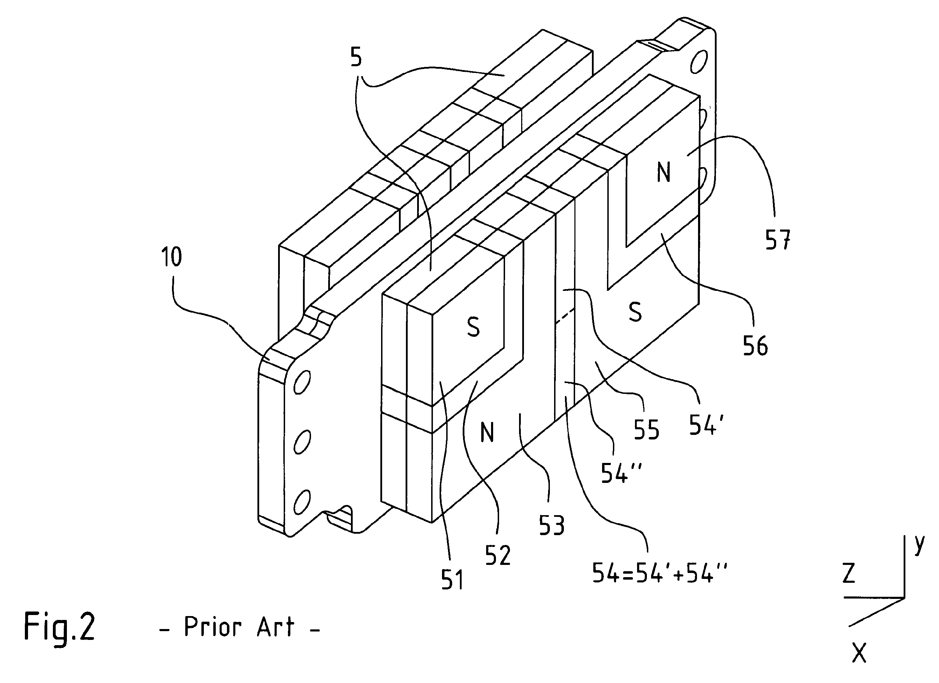

**Fig. 2** shows in perspective view the assembly consisting of the printed circuit board 10 carrying printed coils occluded in this view, and the multipolar magnets 5 facing it, for a prior art actuator. Between the opposing poles of the magnet 5, neutral zones 52, 54, 56 are shown in exaggerated width. Small neutral zones 52, 54, 56 result and are unavoidable whenever a magnetic material is magnetized into having opposing poles adjoining as in the magnets 5. The Figure also shows that the neutral zone 52 between opposing poles 51 and 53 and the neutral zone 56 between opposing poles 55 and 57 are L-shaped or non-straight, and that the neutral zone 54 between opposing poles 53 and 55 has a first part 54'' where the adjoining magnetic poles 53, 55 are wider than at a second part 54' thereof.

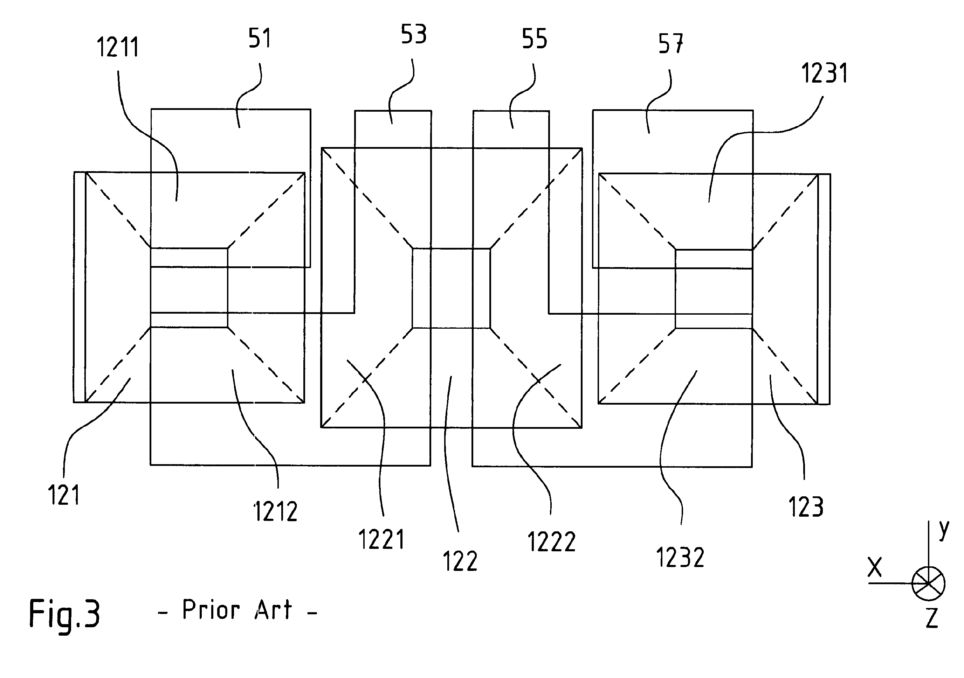

**Fig. 3** shows in plan view the superposition of magnet contours 51, 53, 55, 57 and coil contours 121, 122, 123 for a prior art actuator. In the coil of contour 121, which is a first focus or tilt coil, an upper horizontal branch 1211 interacts with the magnetic flux of magnet 51, and a lower horizontal branch 1212 interacts with the magnetic flux of the lower part of magnet 53. In the coil of contour 122, which is the tracking coil, a left vertical branch 1221 interacts with the magnetic flux of magnet 53, and a right vertical branch 1222 interacts with the magnetic flux of magnet 55. In the coil of contour 123, which is a second focus or tilt coil, an upper horizontal branch 1231 interacts with the magnetic flux of magnet 57, and a lower horizontal branch 1232 interacts with the magnetic flux of the lower part of magnet 55.

It can be seen that the part of the magnet 53 that is facing the top part of the left vertical branch 1221 of the coil of contour 122 is less wide than the part of the magnet 53 that is facing the bottom part thereof; and that the part of the magnet 55 that is facing the top part of the right vertical branch 1222 of the coil of contour 122 is less wide than the part of the magnet 55 that is facing the bottom part thereof. As a consequence of this, in the prior art actuator, the bottom parts of the vertical branches 1221, 1222 of the coil of contour 122 will produce a force that is slightly bigger than the force produced by the corresponding top parts. This in turn will result in an unwanted torque being produced, which, when no countermeasures are being taken, will rotate, i.e. tilt, the movable part around the axis of the information direction Z. Any tilting will deteriorate the readout signals from the disk. Also, keeping in mind that the disk is being rotated, and that tracking and focus forces are highly dynamic, such torque and rotation is likely to cause mechanical oscillations of the movable part and to destabilize the actuator and its servo control.

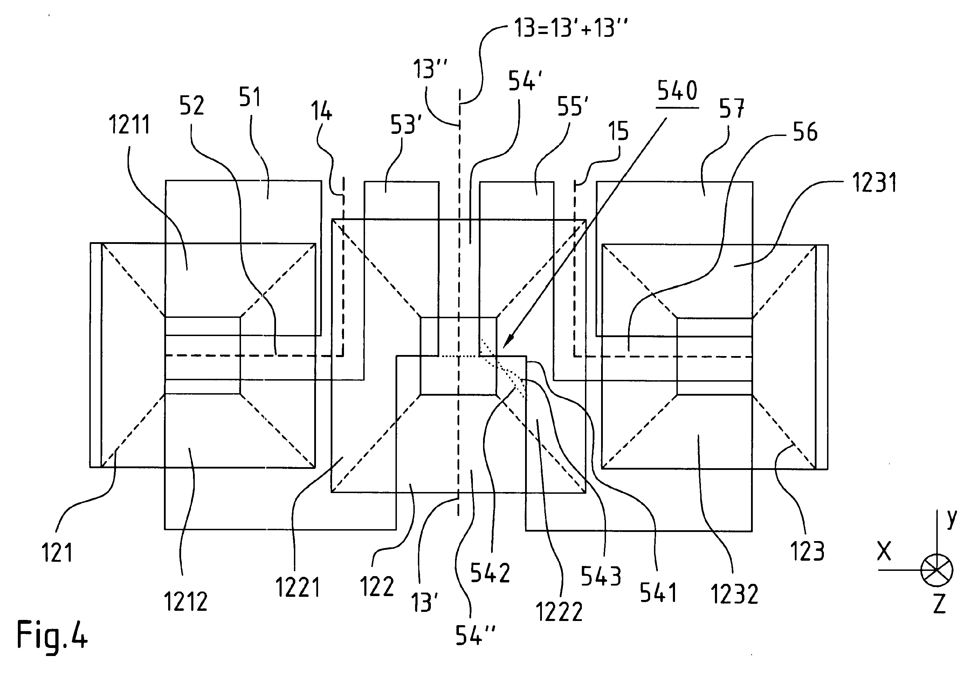

**Fig. 4** shows in plan view the superposition of magnet contours 51, 53', 55', 57 and coil contours 121, 122, 123 for an actuator according to the invention. Here it is shown that in the magnet composed of poles 51, 53', 55', 57, near a first, lower line part 13' of a first separation line 13 the adjoining magnetic poles 53' and 55' are wider than at the top line part 13'' of the first separation line 13. It is also shown that opposing magnetic poles 51 and 53' adjoin along a non-straight, in this case L-shaped, second separation line 14, and that opposing magnetic poles 55' and 57 adjoin along a non-straight, L-shaped second separation line 15. It is also shown that the magnet has an un-magnetized neutral zone 54'' in the vicinity of the first separation line 13 and in between the adjoining magnetic poles 53', 55' that is wider in the vicinity of the first, lower part 13' than in the vicinity of the upper part 13'' of the first separation line 13.

It is a matter of mechanical design, to dimension the widening of the neutral zone 54 such that the force generated in the wider parts of the magnetic poles equals that generated in the narrower parts, so that no torque is generated. As a first approximation, the dimensioning will be such that the area where the coil 122 faces the magnetic poles 53', 55' near the first line part 13' is substantially equal to the area where the coil 122 faces the magnetic poles 53', 55' near the second line part 13''.

It has also been found that if the transition 540 between the narrower part 54' and the wider part 54'' of the un-magnetized zone 54 is shaped in a sloped form 542, this has the advantage of minimizing any unwanted focus force which may arise as an unwanted by-product of a tracking force being generated.

With other words, the invention refers to a pickup 1 for optical recording media having an actuator 8 for focus and tracking control where, in order to avoid unwanted torque components being generated when magnets 5 facing coils 121, 122, 123 are unsymmetric, the magnetic flux in broad parts of the magnet 53', 55' is deliberately reduced by broadening, in that region, the neutral zone 54 near a separation line 13 to which the broad magnet parts 53', 55' adjoin.

## Claims

1. An objective lens driving device (1) having a movable unit (8) carrying coils (121, 122, 123) that face a fixed magnet configuration (5) having two or more poles (51, 53', 55', 57), where in a part of the magnet configuration (5) that faces one of the coils (122) two opposing magnetic poles (53', 55') adjoin along a first separation line (13) with an un-magnetized neutral zone (54) surrounding it, the first separation line (13) having a first line part (13') where at least one of the adjoining magnetic poles (53', 55') has a profile property of being wider, in a direction transversal to the first separation line (13), than at a second line part (13") of the first separation line (13),
the device **characterized in that** in the vicinity of the first line part (13') of the first separation line (13) the un-magnetized neutral zone (54) has a first zone part (54 ") having a first width bigger than a second width of a second zone part (54') in the vicinity of the second line part (13 ") of the first separation line (13).

2. The device of claim 1, further **characterized in that** at least one of the opposing magnetic poles (53', 55') adjoins to a third magnetic pole (51, 57) along a second separation line (14, 15), **in that** the second separation line (14, 15) is at least partially not parallel to the first separation line (13), and **in that** the profile property results from the pole (53', 55') being confined by the first and second separation lines (13, 14, 15).

3. The device of claim 2, further **characterized in that** the second separation line (14, 15) is L-shaped with a first line segment being parallel to the first separation line (13) and a second line segment being at right angles to the first separation line (13).

4. The device of claim 1, further **characterized in that** the profile property results from the at least one adjoining magnetic pole (53', 55') having a reduced space because of one or more other obstructing apparatus elements.

5. The device of one of the previous claims, further **characterized in that** between the first zone part (54 ") and the second zone part (54') there is a transition (540) between the first width and the second width of the un-magnetized neutral zone (54) that is one of stepped (541), linearly increasing (542), steadily changing (543), or a combination thereof.

6. The device of claim 3, further **characterized in that** a transition between the first zone part (54 ") and the second zone part (54') is situated near where the first line segment and the second line segment meet.

7. The device of claim 1, further **characterized in that** the first width is dimensioned in such a way that the area where the coil (122) faces the magnet (5) near the first line part (13') is substantially equal to the area where the coil (122) faces the magnet (5) near the second line part (13 ") .

8. A device for accessing optical recording media, the device **characterised in that** it is provided with an object lens driving device (1) according to any one of the previous claims.

## Patentansprüche

1. Antriebsvorrichtung einer Objektivlinse (1), die eine bewegliche Einheit (8) aufweist, welche einem festen Magnetsystem (5) mit zwei oder mehr Polen (51, 53', 55', 57) gegenüberliegende Spulen (121, 122, 123) trägt, wobei in einem einer der Spulen (122) gegenüberliegenden Bereich des Magnetsystems (5) zwei magnetische Gegenpole (53', 55') entlang einer ersten Trennungslinie (13) mit einer diese umgebenden nicht magnetisierten neutralen Zone (54) angrenzen, wobei die erste Trennungslinie (13) einen ersten Linienteil (13') aufweist, wo mindestens einer der angrenzenden magnetischen Pole (53', 55') als Profileigenschaft aufweist, in einer quer zu der ersten Trennungslinie (13) verlaufenden Richtung breiter als bei einem zweiten Linienteil (13") der ersten Trennungslinie (13) zu sein; die Vorrichtung **dadurch gekennzeichnet, dass** in der Nachbarschaft des ersten Linienteiles (13') der ersten Trennungslinie (13) die nicht magnetisierte neutrale Zone (54) einen ersten Zonenteil (54") aufweist, der eine erste Breite aufweist, die breiter als eine zweite Breite eines zweiten Zonenteiles (54') in der Nachbarschaft des zweiten Linienteiles (13") der ersten Trennungslinie (13) ist.

2. Vorrichtung nach Anspruch 1, weiter **gekennzeichnet dadurch, dass** mindestens einer der magnetischen Gegenpole (53', 55') an einen dritten magnetischen Pol (51, 57) entlang einer zweiten Trennungslinie (14, 15) angrenzt, **dadurch, dass** die zweite Trennungslinie (14, 15) mindestens teilweise nicht parallel zu der ersten Trennungslinie (13) verläuft, und **dadurch, dass** die Profileigenschaft daraus resultiert, dass der Pol (53', 55') durch die erste und zweite Trennungslinie (13, 14, 15) eingeschlossen ist.

3. Vorrichtung nach Anspruch 2, weiter **dadurch gekennzeichnet, dass** die zweite Trennungslinie (14, 15) eine L-förmige Gestalt mit einem ersten Linienabschnitt aufweist, der parallel zu der ersten Trennungslinie (13) verläuft, und mit einem zweiten Linienabschnitt, der rechtwinkelig zu der ersten Trennungslinie (13) verläuft.

4. Vorrichtung nach Anspruch 1, weiter **dadurch gekennzeichnet, dass** die Profileigenschaft daraus resultiert, dass der mindestens eine angrenzende magnetische Pol (53', 55') einen begrenzten Raum wegen eines oder mehrerer hindernder Geräteelemente aufweist.

5. Vorrichtung nach einem der vorhergehenden Ansprüche, weiter **dadurch gekennzeichnet, dass** zwischen dem ersten Zonenteil (54") und dem zweiten Zonenteil (54') ein Übergang (540) zwischen der ersten Breite und der zweiten Breite der nicht magnetisierten neutralen Zone (54) vorhanden ist, der entweder abgestuft (541), linear ansteigend (542), sich ständig ändernd (543) oder eine Kombination davon ist.

6. Vorrichtung nach Anspruch 3, weiter **dadurch gekennzeichnet, dass** ein Übergang zwischen dem ersten Zonenteil (54") und dem zweiten Zonenteil (54') in der Nähe der Stelle liegt, WO sich der erste Linienabschnitt und der zweite Linienabschnitt treffen.

7. Vorrichtung nach Anspruch 1, weiter **dadurch gekennzeichnet, dass** die erste Breite so bemessen ist, dass die Fläche, wo die Spule (122) dem Magneten (5) in der Nähe des ersten Linienteiles (13') gegenüberliegt, im Wesentlichen gleich der Fläche ist, wo die Spule (122) dem Magneten (5) in der Nähe des zweiten Linienteiles (13") gegenüberliegt.

8. Vorrichtung zum Zugreifen auf optische Aufzeichnungsmedien, wobei die Vorrichtung **dadurch gekennzeichnet ist, dass** sie mit einer Antriebsvorrichtung (1) einer Objektivlinse nach irgendeinem der vorhergehenden Ansprüche ausgestattet ist.

## Revendications

1. Dispositif d'entraînement de lentille d'objectif (1) comportant une unité mobile (8) portant des bobines (121, 122, 123) qui font face à une configuration d'aimants (5) munie d'au moins deux pôles (51, 53', 55', 57) dans lequel dans une partie de la configuration d'aimants (5) qui fait face à une des bobines (122), deux pôles magnétiques opposés (53', 55') avoisinent le long d'une première ligne de séparation (13) entourée d'une zone neutre non magnétisée (54), la première ligne de séparation (13) ayant une première partie de ligne (13') où au moins un des deux pôles magnétiques voisins (53', 55') a une propriété profil d'être plus large, dans une direction transversale à la première ligne de séparation (13), qu'auprès d'une deuxième partie de ligne (13") de la première ligne de séparation (13), le dispositif étant **caractérisé en ce que** au voisinage de la première partie de ligne (13') de la première ligne de séparation (13), la zone neutre non magnétisée (54) a une première partie de zone (54") ayant une première largeur supérieure à une deuxième largeur d'une deuxième partie de zone (54') au voisinage de la deuxième partie de ligne (13") de la première ligne de séparation (13).

2. Dispositif selon la revendication 1, **caractérisé en outre en ce que** au moins un des pôles magnétiques opposés (53', 55') avoisine un troisième pôle magnétique (51, 57) le long d'une deuxième ligne de séparation (14, 15), **en ce que** la deuxième ligne de séparation (14, 15) est au moins partiellement non parallèle à la première ligne de séparation (13), et **en ce que** la propriété profil resulte du pôle (53', 55') étant limité par les première et deuxième lignes de séparation (13, 14, 15).

3. Dispositif selon la revendication 2, **caractérisé en outre en ce que** la deuxième ligne de séparation (14, 15) est en forme de L dont un premier segment est parallèle à la première ligne de séparation (13) et un deuxième segment est perpendiculaire à la première ligne de séparation (13).

4. Dispositif selon la revendication 1, **caractérisé en outre en ce que** la propriété profil resulte du fait que le au moins un pôle magnétique voisin (53', 55') dispose d'un espace réduit à cause de la présence d'au moins un autre élément de l'appareil qui fait de l'obstruction.

5. Dispositif selon l'une des revendications précédentes, **caractérisé en outre en ce que** entre la première partie de zone (54") et la deuxième partie de zone (54'), il existe une transition (540) entre la première et la deuxième largeurs de la zone neutre non magnétisée (54) qui se présente soit sous la forme soit d'un palier (541), soit d'une augmentation linéaire (542), soit d'une variation régulière (543), soit d'une combinaison de ces trois formes.

6. Dispositif selon la revendication 3, **caractérisé en outre en ce qu'**il existe une transition entre la première partie de zone (54") et la deuxième partie de zone (54') qui se situe près de l'endroit où se rencontrent les premier et deuxième segments de ligne.

7. Dispositif selon la revendication 1, **caractérisé en outre en ce que** la première largeur est dimensionnée de telle façon que la surface de la zone sur laquelle la bobine (122) fait face à l'aimant (5) près de la première partie de ligne (13') est sensiblement égale à la surface de la zone sur laquelle la bobine (122) fait face à l'aimant (5) près de la deuxième partie de ligne (13").

8. Dispositif d'accès à des supports d'enregistrement optiques, le dispositif étant **caractérisé en ce qu'**il comporte un dispositif d'entraînement de lentille d'objectif (1) conforme à n'importe laquelle des revendications précédentes.
